# FASCICULE DE BREVET EUROPEEN

(11) **EP 3 802 314 B1**
(45) Date de publication et mention de la délivrance du brevet: **15.02.2023**
(21) Numéro de dépôt: 19725019.4
(22) Date de dépôt: 28.05.2019
(51) Int. Cl.: B64C 1/14

(54) **PORTE DE CABINE PRESSURISÉE D'AÉRONEF À STRUCTURE FORMÉE DE POUTRES**
DRUCKKABINENTÜR EINES FLUGZEUGS MIT EINER DURCH TRÄGER GEBILDETEN STRUKTUR
AIRCRAFT PRESSURIZED CABIN DOOR WITH A STRUCTURE FORMED BY BEAMS

(30) Priorité: 02.06.2018 FR 1854805
(43) Date de publication de la demande: 14.04.2021
(73) Titulaire: Latecoere, 31500 Toulouse, Occitanie (FR)
(72) Inventeur: DEVILLEZ, Sébastien, 31240 SAINT JEAN OCCITANIE (FR)
(74) Mandataire: Junca, Eric
(86) Numéro de dépôt international: PCT/EP2019/063846
(87) Numéro de publication internationale: WO 2019/229074

(56) Documents cités:
- DE-A1- 10 109 638
- FR-A- 979 525
- US-A1- 2002 043 588
- US-A1- 2007 176 327
- US-A1- 2011 135 885
- US-A1- 2014 186 572
- US-B2- 6 817 574

## Description

### DOMAINE TECHNIQUE

L'invention a trait au domaine de l'aéronautique et concerne une porte de cabine pressurisée d'aéronef.

Les aéronefs, et en particulier les avions, sont généralement équipés de portes permettant aux personnes et au matériel d'entrer et de sortir de la cabine. La cabine étant pressurisée, ces portes doivent garantir, durant le vol, la fermeture de la cabine et le maintien d'une importante différence de pression entre l'intérieur de la cabine et l'extérieur. Les portes de cabine pressurisée comportent pour cela un panneau extérieur, également dénommé « peau », qui, lorsque la porte est fermée, se place dans la continuité du fuselage de l'aéronef et qui agit comme une barrière pour le maintien de la différence de pression. Pour que ce panneau extérieur puisse présenter une épaisseur acceptable malgré les importantes contraintes dûes à la différence de pression, la porte comporte également une structure de porte formée de poutres fixées sur le panneau extérieur pour assurer la rigidité de ce dernier.

Par ailleurs, les portes de cabine sont aussi généralement le support de divers équipements tels que des mécanismes d'ouverture de porte ou des équipements de confort et de sécurité. La structure de porte, en plus d'assurer la rigidité de la porte, doit également être dimensionnée pour supporter ces masses supplémentaires.

Les portes de cabine pressurisée sont un élément critique de la sécurité d'un aéronef car elles sont garantes du maintien de la pression à l'intérieur de la cabine. Les panneaux de porte et les structures de porte associées sont donc dimensionnées pour un haut niveau de sécurité.

### ÉTAT DE LA TECHNIQUE

La demande de brevet FR2928620 décrit une porte de cabine d'avion dont la structure de porte comprend des poutres transversales et des longerons se croisant pour former une structure rigide. Les poutres transversales et les longerons sont des profilés de type IPN. Dans l'exemple décrit par ce document, quatre longerons et six poutres transversales se croisent à angle droit et sont fixés les uns aux autres, formant ainsi une structure d'une grande rigidité.

Une telle structure de porte est difficile et coûteuse à fabriquer en raison notamment des liaisons à réaliser au niveau des croisements entre les longerons et les poutres transversales. Ces liaisons requièrent des fixations, des pièces supplémentaires ou des liaisons complexes et entraine aussi des augmentations de masse.

Par ailleurs, le croisement entre les poutres transversales et les longerons rend difficile la fabrication de cette porte en matériaux composites pour lesquels la réalisation de telles intersections génère une difficulté supplémentaire en assemblage ou en moulage. ,

La demande de brevet US2007007390 se propose de résoudre certains des inconvénients indiqués ci-dessus en proposant une porte d'avion monolithique réalisée d'une pièce. De fortes nervures de renfort se croisent à angle droit sur toute la surface interne de la porte. Une telle porte présente également une rigidité conséquente, propre à son utilisation en aéronautique, mais reste d'une complexité et d'un cout de réalisation important. Sa masse est également conséquente.

La demande de brevet US2009/0078826 décrit une porte de cabine pressurisée réalisée en matériaux composites et dont la conception est optimisée pour l'usage de ces matériaux composites. La porte comprend des poutres disposées à angle droit les unes des autres mais ne se croisant pas. Le procédé de fabrication d'une telle porte est simplifié par rapport aux procédés évoqués ci-dessus et la réalisation en matériaux composites est facilitée. Cependant, le support de la peau d'une telle porte est inférieur à celui des structures de porte à poutres croisées.

D'autres documents de l'état de la technique qui sont considérés comme pertinents aux fins de comprendre l'invention sont les suivantes : US6817574 et DE10109638.

### EXPOSÉ DE L'INVENTION

L'invention vise à améliorer les portes de cabine pressurisée d'aéronef, en proposant une telle porte qui allie une importante rigidité permettant son emploi pour des aéronefs volant en altitude, à une simplicité de réalisation qui permet une fabrication rapide et à moindre cout, et qui permet sa réalisation par tout procédé et matériaux, incluant les matériaux composites.

À cet effet, l'invention vise une porte de cabine pressurisée d'aéronef, comportant un panneau extérieur et une structure de porte. La structure de porte comprend :
- deux poutres circonférentielles fixées sur les rebords latéraux de la porte ;
- une pluralité de poutres longitudinales disposées sensiblement perpendiculairement entre les poutres circonférentielles et fixées sur le panneau extérieur, chaque poutre longitudinale s'étendant d'une poutre circonférentielle à l'autre.

Chaque poutre longitudinale est un profilé ouvert dont l'ouverture est tournée vers le panneau extérieur, cette ouverture étant close par la face interne du panneau extérieur sur laquelle est fixée la poutre longitudinale.

La porte de cabine pressurisée peut comporter les caractéristiques additionnelles suivantes, seules ou en combinaison :
- une poutre longitudinale présente deux barres d'appui fixées sur le panneau extérieur, ces barres d'appui s'étendant sur toute la longueur de la poutre longitudinale, de part et d'autre de ladite ouverture ;
- la poutre longitudinale comporte deux parois latérales s'étendant obliquement l'une vers l'autre à partir des deux barres d'appui ;
- chaque barre d'appui est constituées par un pli d'une des parois latérales ;
- la poutre longitudinale comporte une paroi de sommet, opposée aux barres d'appui, dont la largeur, mesurée dans un plan perpendiculaire à l'axe longitudinal de la poutre longitudinale, est inférieure ou égale à la distance séparant les deux barres d'appui ;
- une poutre longitudinale comporte une nervure de redondance d'efforts s'étendant longitudinalement à l'intérieur de la poutre longitudinale, sur toute la longueur de la poutre longitudinale ;
- la nervure de redondance d'efforts est constituée d'une paroi plane de redondance ;
- la nervure de redondance d'efforts comporte des pattes de fixation de la paroi plane de redondance sur la poutre longitudinale ;
- la nervure de redondance d'efforts est constituée d'un tube ;
- la poutre longitudinale est constituée de trois pièces séparées formant une paroi de redondance d'efforts ;
- la structure de porte comporte un cadre formé des poutres circonférentielles et de deux poutres longitudinales situées aux extrémités des poutres circonférentielles ;
- les poutres longitudinales sont fixées, par chacune de leurs extrémités, aux poutres circonférentielles ;
- les poutres circonférentielles comportent une âme formée d'une paroi unique ;
- une poutre circonférentielle comporte une semelle de fixation fixée au panneau extérieur et formée d'un pli de l'âme de la poutre circonférentielle ;
- les poutres circonférentielles comportent des rebords de renfort, opposés au panneau extérieur ;
- les rebords de renforts sont fixés sur les poutres longitudinales ;
- le rebord de renfort d'une poutre circonférentielle est formé d'un pli de l'âme de cette poutre circonférentielle ;
- la porte comprend au moins un support circonférentiel s'étendant entre deux poutres longitudinales ;
- la porte comprend au moins un hublot entre deux poutres longitudinales.

Dans la présente description et dans les revendications, l'adjectif « longitudinal » fait référence à la direction longitudinale du fuselage de l'aéronef. Les poutres longitudinales sont donc des poutres s'étendant sur la porte parallèlement à l'axe longitudinal dans lequel s'étend le fuselage de l'aéronef. De même, l'adjectif « circonférentiel » fait référence à la circonférence du fuselage de l'aéronef. Les poutres circonférentielles sont donc des poutres qui s'étendent suivant un cercle relatif à une section du fuselage de l'aéronef. De même, la face interne du panneau extérieur désigne la face qui est du côté de la cabine, par opposition à la face externe du panneau extérieur qui est tournée vers l'extérieur.

Une telle porte assure sa rigidité sans avoir recours à des poutres se croisant. Les poutres qui sont agencées transversalement les unes aux autres viennent en contact, les extrémités d'une poutre contre le flanc d'une autre poutre, sans croisement. Les jonctions entre poutres sont ainsi simplifiées et l'assemblage de poutres réalisées au préalable est simplifié. Cette disposition est particulièrement propice à la réalisation en matériaux composites.

L'invention permet par ailleurs l'emploi de plusieurs techniques de fabrication, différents matériaux et techniques de mise en oeuvre pouvant être employés pour la même porte. La simplicité de la conception permet de mettre en oeuvre efficacement la majorité des techniques utilisées dans la construction aéronautique, et d'envisager des technologies trop complexes pour une structure à poutre croisée.

Malgré sa simplicité d'assemblage, la porte présente une grande rigidité permettant au panneau extérieur de maintenir d'importantes différences de pression entre l'intérieur et l'extérieur de la cabine.

Chacune des poutres longitudinales présente deux lignes d'appui, de part et d'autre de l'ouverture de son profil, pour la fixation du panneau extérieur. Une poutre longitudinale procure deux zones de maintien, parallèles et espacées, pour toute la largeur du panneau extérieur.

### PRESENTATION DES FIGURES

D'autres caractéristiques et avantages de l'invention apparaitront à la lecture de la description non limitative qui suit, en référence aux dessins annexés dans lesquels :
- la figure 1 est une vue en perspective de la face interne d'une porte de cabine pressurisée selon l'invention ;
- la figure 2 est une vue en coupe verticale de la porte de la figure 1 ;
- la figure 3 est une vue partielle agrandie de la figure 2, illustrant un premier mode de réalisation d'une poutre longitudinale ;
- les figures 4 à 7 illustrent respectivement un deuxième, troisième et quatrième mode de réalisation d'une poutre longitudinale ;
- la figure 8 est une vue partielle de la figure 2 illustrant le comportement de la porte sous l'effet de la pression ;
- la figure 9 illustre une variante de la porte de la figure 1.

### DESCRIPTION DÉTAILLÉE

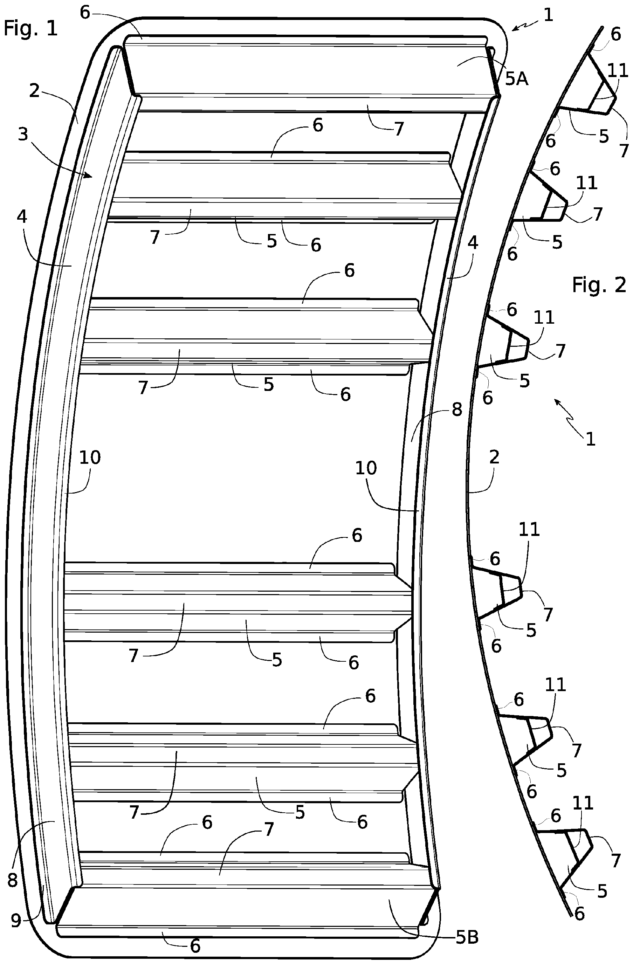

La figure 1 illustre en perspective une porte 1 de cabine pressurisée d'aéronef. Dans le présent exemple, cette porte 1 est destinée à fermer une ouverture correspondante pratiquée dans le fuselage d'un avion. La porte 1 peut s'ouvrir lorsque l'avion est au sol pour permettre l'entrée et la sortie de passagers, pour constituer une sortie de secours, une trappe d'accès aux soutes, ou tout autre panneau ouvrant pour avion. La porte 1 de cabine est associée de manière classique à des mécanismes de charnière, de commandes d'ouverture et de fermeture, ainsi qu'à des dispositifs d'étanchéité (non représentés).

La porte 1 de cabine comprend un panneau extérieur 2 et une structure 3 de porte qui renforce la tenue du panneau extérieur 2. Lorsque la porte 1 de cabine est fermée, le panneau extérieur 2 constitue la surface externe de l'avion, dans le prolongement du fuselage. Le panneau extérieur 2 peut être par exemple réalisé à partir d'une tôle d'aluminium de 2 à 5 millimètres d'épaisseur. Dans le présent exemple, le panneau extérieur 2 présente une courbure (voir figure 2) qui suit la forme du fuselage de l'avion dont la section est généralement sensiblement circulaire.

La structure 3 de porte est fixée sur la partie interne du panneau extérieur 2, c'est-à-dire du côté de l'intérieur de la cabine de l'avion. La structure 3 de porte comprend deux poutres circonférentielles 4 qui sont fixées au panneau extérieur 2 sur les rebords latéraux de la porte 1. Les poutres circonférentielles 4 suivent la courbure circonférentielle du panneau extérieur 2, et plus généralement du fuselage de l'avion. Dans l'exemple décrit, les poutres circonférentielles 4 sont des poutres verticales (en référence à la position représentée à la figure 1), chacune étant fixée à proximité d'un rebord latéral du panneau extérieur 2.

La structure 3 de porte comprend également une pluralité de poutres longitudinales 5 qui s'étendent dans la direction longitudinale du fuselage de l'avion c'est-à-dire, en référence à la position de la figure 1, sensiblement horizontalement. Chaque poutre longitudinale 5 comporte une première extrémité venant au contact de l'une des poutres circonférentielles 4, et comporte une seconde extrémité qui vient au contact de l'autre poutre circonférentielle 4. Chaque poutre longitudinale 5 s'étend ainsi perpendiculairement aux poutres circonférentielles 4, d'une poutre circonférentielle 4 à l'autre. En variante, chaque poutre longitudinale 5 s'étend simplement transversalement aux poutres circonférentielles 4 cas, dans certain cas, la porte 1 est montée dans des zones évolutives ou les poutres longitudinales ne sont pas perpendiculaires aux poutres circonférentielles.

Les poutres longitudinales 5 sont des profilés présentant chacun deux barres d'appui 6 qui sont fixées sur le panneau extérieur 2 suivant toute la longueur de la poutre longitudinale 5 correspondante. Chacune des poutres longitudinales 5 comporte une paroi de sommet 7, opposée aux barres d'appui 6. Dans l'exemple des figures 1 et 2, la paroi de sommet 7 est plane.

Les poutres circonférentielles 4 comportent chacune une âme 8 constituée d'une paroi unique s'étendant perpendiculairement à la surface du panneau extérieur 2. Chaque poutre circonférentielle 4 comporte de plus une semelle de fixation 9, pour sa fixation au panneau extérieur 2, et un rebord de renfort 10 qui peut être fixé sur la paroi de sommet 7 de chaque poutre longitudinale 5 qui vient au contact de la poutre circonférentielle 4 considérée.

La semelle de fixation 9 et le rebord de renfort 10 peuvent être constitués par des plis de l'âme de la poutre circonférentielle 4.

Les deux poutres circonférentielles 4 et les deux poutres longitudinales 5A, 5B d'extrémité supérieure et d'extrémité inférieure de la porte 1, constitue un cadre de la structure 3 de porte. Chacune des extrémités de l'âme 8 des poutres circonférentielles 4 est fixée sur la poutre longitudinale 5A, 5B d'extrémité correspondante.

La figure 2 est une coupe verticale de la porte 1 de la figure 1 et montre le profil des poutres longitudinales 5 ainsi que leur agencement par rapport au panneau extérieur 2. Chaque poutre longitudinale 5 est fixée au panneau extérieur 2 par ses deux barres d'appui 6, de sorte que sa paroi de sommet 7 soit sensiblement parallèle à la portion de panneau extérieur 2 se trouvant entre les deux barres d'appui 6.

Les poutres longitudinales 5 sont des profilés trapézoïdaux ouverts dont l'ouverture 18 est tournée vers le panneau extérieur 2. Autrement dit, les poutres longitudinales 5 sont des cylindres dont la courbe directrice est une forme trapézoïdale qui est ouverte au niveau du grand côté du trapèze. L'ouverture 18 est close par la face interne du panneau extérieur 2 sur laquelle est fixée la poutre longitudinale (5) correspondante.

La fixation des barres d'appui 6 sur le panneau extérieur 2 ferme l'ouverture 18 de la poutre longitudinale 5, de sorte que celle-ci constitue une forme creuse dont l'intérieur n'est pas accessible.

Le profil des poutres longitudinales 5 étant trapézoïdal, la largeur de la paroi de sommet 7, mesurée dans un plan perpendiculaire à l'axe longitudinal de la poutre longitudinale 5, est inférieure à la distance séparant les deux barres d'appui 6.

Chaque poutre longitudinale 5 comporte de plus une nervure de redondance d'effort 11.

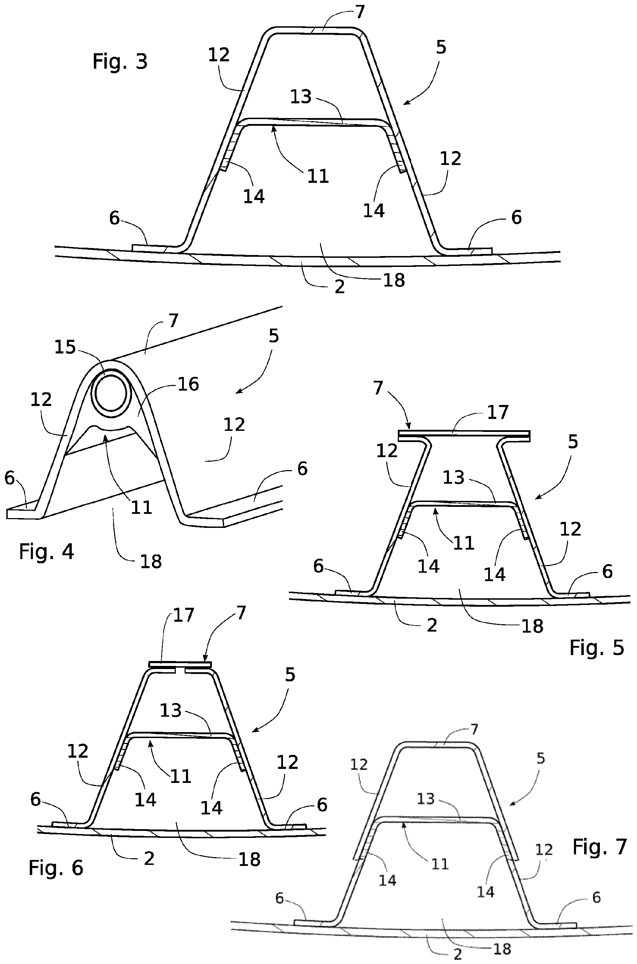

La figure 3 est une vue agrandie de la figure 2, montrant le profil de l'une des poutres longitudinales 5. La poutre longitudinale 5 est ici réalisée en deux pièces, par exemple à partir de tôles pliées, de métaux ou de matériaux composites mis en formes par extrusion, ou par moulage

Une première pièce inclut les deux barres d'appui 6, deux parois latérales 12 s'étendant obliquement l'une vers l'autre et, entre ces deux parois latérales 12, la paroi de sommet 7. Les barres d'appui 6 sont constituées chacune par un pli d'une paroi latérale 12.

La deuxième pièce constituant la poutre longitudinale 5 comporte une paroi de redondance 13 plane et des pattes de fixation 14 pour sa fixation sur la première pièce. La nervure de redondance d'effort 11 s'étend sur toute la longueur de la poutre longitudinale 5.

Les figures 4 à 7 illustrent quatre variantes pour le profil des poutres longitudinales 5. Les éléments similaires des différentes variantes portent les mêmes numéros de renvoi aux figures.

La figure 4 représente en perspective l'extrémité d'une poutre longitudinale 5. La paroi de sommet 7 est ici arrondie.

La nervure de la redondance d'effort 11 est ici constituée par un tube 15 de section circulaire s'étendant à l'intérieur de la poutre longitudinale 5, sur toute la longueur de cette dernière. Le tube 15 est maintenu contre la paroi de sommet 7 par une pièce de maintien 16.

La variante de la figure 5 est illustrée selon une coupe similaire à la coupe de la figure 3. Selon cette variante, la paroi de sommet 7 est une barre 17 s'étendant sur toute la longueur de la poutre longitudinale 5 et fixée à une portion des parois latérales 12 qui sont recourbées vers l'extérieur. Moyennant dimensionnement adéquat, cette barre 17 peut assurer un rôle de redondance d'efforts à la place de la paroi de redondance 13, qui peut ainsi être optionnellement supprimée.

La variante de la figure 6 est relative, quant à elle, à une autre forme de paroi de sommet 7 qui est également constituée d'une barre 17 fixée ici sur des portions des parois latérales 12 qui sont recourbées vers l'intérieur. Moyennant dimensionnement adéquat, cette barre 17 peut assurer un rôle de redondance d'efforts à la place de la paroi de redondance 13, qui peut ainsi être optionnellement supprimée.

La variante de la figure 7 est illustrée selon une coupe similaire à celle de la figure 3. Selon cette variante, la poutre longitudinale 5 est également réalisée en deux pièces. Une première pièce inclut les deux barres d'appui 6, deux parois latérales 12 s'étendant obliquement l'une vers l'autre et, entre ces deux parois latérales 12, la paroi de redondance 13. Les barres d'appui 6 sont constituées chacune par un pli d'une paroi latérale 12. La deuxième pièce constituant la poutre longitudinale 5 comporte également deux parois latérales 12 s'étendant obliquement l'une vers l'autre et, entre ces deux parois latérales 12, la paroi de sommet 7. Des pattes de fixation 14 permettent la fixation des deux pièces. La nervure de redondance d'effort 11 s'étend sur toute la longueur de la poutre longitudinale 5.

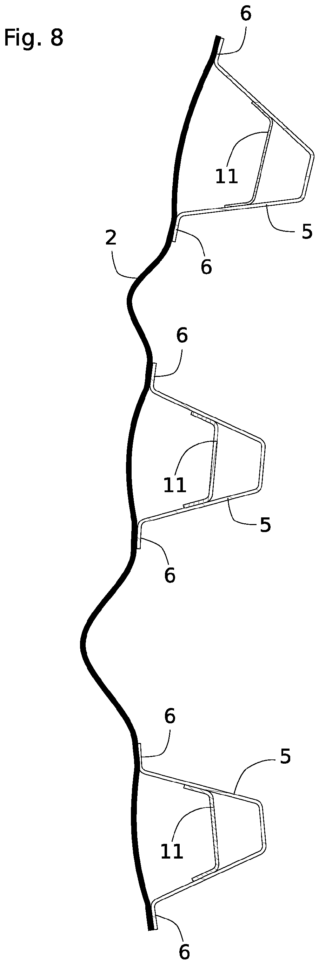

La figure 8 est une vue agrandie d'une portion de la figure 2 montrant trois poutres longitudinales 5 vues en coupe et une portion correspondante du panneau extérieur 2. Sur cette figure 8, les déformations du panneau extérieur 2 dues à la pression ont été fortement exagérées pour les besoins de la description. En effet, la porte 1 de cabine étant destinée à fermer le fuselage d'un avion en vol, le panneau extérieur 2 est une peau devant contenir une importante différence de pression entre l'intérieur de la cabine et l'extérieur. La pression s'exerçant sur la face interne du panneau extérieur 2 déforme celui-ci vers l'extérieur. La figure 8 montre que, entre deux poutres longitudinales 5, la déformation prend la forme d'un pli vers l'extérieur. Il est donc nécessaire de prévoir suffisamment de poutres longitudinales 5, en fonction de la hauteur de la porte, pour que ces déformations apparaissant entre les poutres longitudinales 5 soient contenues dans une plage acceptable.

Par ailleurs, s'agissant de chaque poutre longitudinale 5, une déformation plus faible a lieu entre les deux barres d'appui 6 d'une même poutre longitudinale 5. Un renfort performant et léger est ainsi obtenu pour chaque poutre longitudinale 5.

La nervure de redondance d'effort 11 contribue de plus à ce maintient d'une faible déformation du panneau extérieur 2 entre les deux barres d'appui 6.

La nervure de redondance d'effort 11 remplit par ailleurs une autre fonction liée à la sécurité. Lors du travail en flexion des poutres longitudinales 5 (de l'intérieur de la cabine vers l'extérieur), la paroi de sommet 7 est sollicitée en compression. Or, la paroi de sommet 7 peut être détériorée pour une raison accidentelle ou un défaut non détecté. Si, en cas extrême, cette détérioration entraine la rupture de la paroi de sommet 7, la nervure de redondance d'effort 11 assure alors la même fonction que la paroi de sommet 7 et maintient l'intégrité de la poutre longitudinale 5 concernée. Le travail en flexion de l'intérieur de la cabine vers l'extérieur, qui est le travail principal des poutres longitudinales 5, est ainsi sécurisé par un double chemin mécanique de transmission des efforts. La redondance apportée par la nervure de redondance d'effort 11 contribue à la sûreté de fonctionnement de la porte 1 de cabine qui est un élément primordial de la sécurité de l'avion puisque toute dégradation de la barrière de pression que forme la porte 1 est critique.

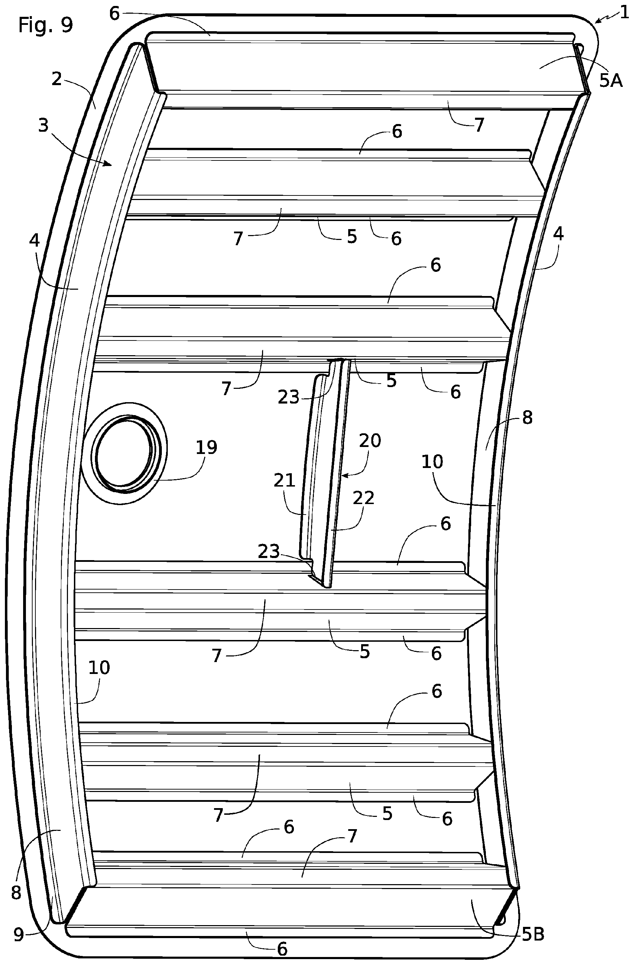

La figure 9 illustre une variante de réalisation de la porte de cabine. La structure de la porte est la même que sur figure 1 et les éléments communs portent les mêmes numéros sur les figures. Selon cette variante, la porte 1 comporte de plus un hublot 19 entre les deux poutres circonférentielles 4, et entre les deux poutres longitudinales 5. L'agencement des poutres 4, 5 permet une grande latitude dans le positionnement horizontal du hublot 19.

Sur la figure 9, la porte de cabine comporte également un support circonférentiel 20 installé entre deux poutres longitudinales 5 et permettant de supporter des mécanismes liés à la porte ou de fournir un support local, supplémentaire, pour le panneau extérieur 2. Le support circonférentiel 20 peut comporter :
- des pattes de fixation 21 épousant la forme du panneau extérieur 2 et pouvant être fixée sur ce dernier ;
- un pli de renfort 22 générant l'inertie et la stabilité du support circonférentielle ;
- une ou des pattes de fixation 23 du support 20 sur les poutres longitudinales 5.

D'autres variantes de réalisation de la porte 1 de cabine pressurisée peuvent être mises en oeuvre sans sortir du cadre de l'invention. Par exemple, la fixation des poutres circonférentielles 4 et des poutres longitudinales 5 sur le panneau extérieur 2 peut être réalisée par tout moyen tel que : fixation mécanique (vis, rivet, bride, etc.), soudure, collage ou tout autre moyen. Il en va de même pour les fixations entre les poutres longitudinales 5 et les poutres circonférentielles 4, ainsi qu'entre les différentes pièces constituant les poutres longitudinales 5.

## Revendications

1. Porte (1) de cabine pressurisée d'aéronef, comportant un panneau extérieur (2) et une structure (3) de porte, la structure (3) de porte comprenant :
- deux poutres circonférentielles (4) fixées sur les rebords latéraux de la porte (1) ;
- une pluralité de poutres longitudinales (5) disposées sensiblement perpendiculairement entre les poutres circonférentielles (4) et fixées sur le panneau extérieur (2), chaque poutre longitudinale (5) s'étendant d'une poutre circonférentielle (4) à l'autre, chaque poutre longitudinale (5) étant un profilé ouvert dont l'ouverture (18) est tournée vers le panneau extérieur (2),
**caractérisée en ce que** ladite ouverture (18) est close par la face interne du panneau extérieur (2) sur laquelle est fixée la poutre longitudinale (5).

2. Porte selon la revendication 1, **caractérisée en ce qu'**une poutre longitudinale (5) présente deux barres d'appui (6) fixées sur le panneau extérieur (2), ces barres d'appui (6) s'étendant sur toute la longueur de la poutre longitudinale (5), de part et d'autre de ladite ouverture (18).

3. Porte selon la revendication 2, **caractérisée en ce que** la poutre longitudinale (5) comporte deux parois latérales (12) s'étendant obliquement l'une vers l'autre à partir des deux barres d'appui (6).

4. Porte selon la revendication 3, **caractérisée en ce que** chaque barre d'appui (6) est constituées par un pli d'une des parois latérales (12).

5. Porte selon l'une des revendications 2 à 4, **caractérisée en ce que** la poutre longitudinale (5) comporte une paroi de sommet (7), opposée aux barres d'appui (6), dont la largeur, mesurée dans un plan perpendiculaire à l'axe longitudinal de la poutre longitudinale (5), est inférieure ou égale à la distance séparant les deux barres d'appui (6).

6. Porte selon l'une quelconque des revendications précédentes, **caractérisée en ce qu'**une poutre longitudinale (5) comporte une nervure de redondance d'efforts (11) s'étendant longitudinalement à l'intérieur de la poutre longitudinale (5), sur toute la longueur de la poutre longitudinale (5).

7. Porte selon la revendication 6, **caractérisée en ce que** la nervure de redondance d'efforts (11) est constituée d'une paroi plane (13) de redondance.

8. Porte selon la revendication 7, **caractérisée en ce que** la nervure de redondance d'efforts (11) comporte des pattes de fixation (14) de la paroi plane (13) de redondance sur la poutre longitudinale (5).

9. Porte selon la revendication 6, **caractérisée en ce que** la nervure de redondance d'efforts (11) est constituée d'un tube (15).

10. Porte selon l'une des revendications 2 à 7, **caractérisée en ce que** la poutre longitudinale est constituée de trois pièces séparées formant une paroi de redondance d'efforts.

11. Porte selon l'une quelconque des revendications précédentes, **caractérisée en ce que** la structure (3) de porte comporte un cadre formé des poutres circonférentielles (4) et de deux poutres longitudinales (5) situées aux extrémités des poutres circonférentielles (4).

12. Porte selon l'une quelconque des revendications précédentes, **caractérisée en ce que** les poutres longitudinales (5) sont fixées, par chacune de leurs extrémités, aux poutres circonférentielles (4).

13. Porte selon l'une quelconque des revendications précédentes, **caractérisée en ce que** les poutres circonférentielles (4) comportent une âme (8) formée d'une paroi unique.

14. Porte selon la revendication 13, **caractérisée en ce qu'**une poutre circonférentielle (4) comporte une semelle de fixation (9) fixée au panneau extérieur (2) et formée d'un pli de l'âme (8) de la poutre circonférentielle (4).

15. Porte selon l'une quelconque des revendications précédentes, **caractérisée en ce que** les poutres circonférentielles (4) comportent des rebords de renfort (10), opposés au panneau extérieur (2).

16. Porte selon la revendication 15, **caractérisée en ce que** les rebords de renforts (10) sont fixés sur les poutres longitudinales (5).

17. Porte selon l'une des revendication 15 ou 16, **caractérisée en ce que** le rebord de renfort (10) d'une poutre circonférentielle (4) est formé d'un pli de l'âme (8) de cette poutre circonférentielle (4).

18. Porte selon l'une quelconque des revendications précédentes, comprenant au moins un support circonférentiel s'étendant entre deux poutres longitudinales (5).

19. Porte selon l'une quelconque des revendications précédentes, comprenant au moins un hublot entre deux poutres longitudinales (5).

## Patentansprüche

1. Tür (1) für eine Druckkabine eines Luftfahrzeugs mit einem Außenblatt (2) und einer Türstruktur (3), wobei die Türstruktur (3) Folgendes umfasst:
- zwei Umfangsträger (4), die an den seitlichen Rändern der Tür (1) befestigt sind;
- mehrere Längsträger (5), die im Wesentlichen senkrecht zwischen den Umfangsträgern (4) angeordnet und am Außenblatt (2) befestigt sind, wobei sich jeder Längsträger (5) von einem Umfangsträger (4) zum anderen erstreckt,
wobei jeder Längsträger (5) ein offenes Profil ist, dessen Öffnung (18) dem Außenblatt (2) zugewandt ist, **dadurch gekennzeichnet, dass** die Öffnung (18) durch die Innenseite des Außenblatts (2), an der der Längsträger (5) befestigt ist, geschlossen wird.

2. Tür nach Anspruch 1, **dadurch gekennzeichnet, dass** ein Längsträger (5) zwei Stützstäbe (6) aufweist, die am Außenblatt (2) befestigt sind, wobei sich die Stützstäbe (6) über die gesamte Länge des Längsträgers (5) auf beiden Seiten der Öffnung (18) erstrecken.

3. Tür nach Anspruch 2, **dadurch gekennzeichnet, dass** der Längsträger (5) zwei Seitenwände (12) aufweist, die sich von den beiden Stützstäben (6) aus schräg zueinander erstrecken.

4. Tür nach Anspruch 3, **dadurch gekennzeichnet, dass** jeder Stützstab (6) eine Faltung einer der Seitenwände (12) gebildet ist.

5. Tür nach einem der Ansprüche 2 bis 4, **dadurch gekennzeichnet, dass** der Längsträger (5) eine den Stützstäben (6) gegenüberliegende Scheitelwand (7) aufweist, deren Breite, gemessen in einer zur Längsachse des Längsträgers (5) senkrechten Ebene, kleiner als oder so groß wie der Abstand zwischen den beiden Stützstäben (6) ist.

6. Tür nach einem der vorangehenden Ansprüche, **dadurch gekennzeichnet, dass** ein Längsträger (5) eine Kraftredundanzrippe (11) aufweist, die sich in Längsrichtung im Inneren des Längsträgers (5) über die gesamte Länge des Längsträgers (5) erstreckt.

7. Tür nach Anspruch 6, **dadurch gekennzeichnet, dass** die Kraftredundanzrippe (11) aus einer ebenen Redundanzwand (13) gebildet ist.

8. Tür nach Anspruch 7, **dadurch gekennzeichnet, dass** die Kraftredundanzrippe (11) Laschen (14) zur Befestigung der ebenen Redundanzwand (13) am Längsträger (5) aufweist.

9. Tür nach Anspruch 6, **dadurch gekennzeichnet, dass** die Kraftredundanzrippe (11) aus einem Rohr (15) gebildet ist.

10. Tür nach einem der Ansprüche 2 bis 7, **dadurch gekennzeichnet, dass** der Längsträger aus drei getrennten Teilen gebildet ist, die eine Kraftredundanzwand bilden.

11. Tür nach einem der vorangehenden Ansprüche, **dadurch gekennzeichnet, dass** die Türstruktur (3) einen Rahmen aufweist, der aus den Umfangsträgern (4) und zwei an den Enden der Umfangsträger (4) befindlichen Längsträgern (5) gebildet ist.

12. Tür nach einem der vorangehenden Ansprüche, **dadurch gekennzeichnet, dass** die Längsträger (5) mit jedem ihrer Enden an den Umfangsträgern (4) befestigt sind.

13. Tür nach einem der vorangehenden Ansprüche, **dadurch gekennzeichnet, dass** die Umfangsträger (4) einen Steg (8) aufweisen, der aus einer einzigen Wand gebildet ist.

14. Tür nach Anspruch 13, **dadurch gekennzeichnet, dass** ein umlaufender Träger (4) eine Befestigungssohle (9) aufweist, die am Außenblatt (2) befestigt und aus einer Faltung des Stegs (8) des Umfangsträgers (4) gebildet ist.

15. Tür nach einem der vorangehenden Ansprüche, **dadurch gekennzeichnet, dass** die Umfangsträger (4) dem Außenblatt (2) gegenüberliegende Verstärkungsränder (10) aufweisen.

16. Tür nach Anspruch 15, **dadurch gekennzeichnet, dass** die Verstärkungsränder (10) an den Längsträgern (5) befestigt sind.

17. Tür nach einem der Ansprüche 15 oder 16, **dadurch gekennzeichnet, dass** der Verstärkungsrand (10) eines Umfangsträgers (4) aus einer Faltung des Stegs (8) dieses Umfangsträgers (4) gebildet ist.

18. Tür nach einem der vorangehenden Ansprüche, umfassend mindestens eine umlaufende Stütze, die sich zwischen zwei Längsträgern (5) erstreckt.

19. Tür nach einem der vorangehenden Ansprüche, umfassend mindestens ein Sichtfenster zwischen zwei Längsträgern (5).

## Claims

1. An aircraft pressurized cabin door (1) comprising an outer panel (2) and a door structure (3 the door structure (3) comprising :
- two circumferential beams (4) fastened to the lateral edges of the door (1);
- a plurality of longitudinal beams (5) arranged substantially perpendicularly between the circumferential beams (4) and fastened to the outer panel (2), each longitudinal beam (5) extending from one circumferential beam (4) to the other;
and in that each longitudinal beam (5) is an open profile of which the opening (18) is directed toward the outer panel (2) **characterized in that** said opening (18) is closed by the internal face of the outer panel (2) to which the longitudinal beam (5) is fastened.

2. The door as claimed in claim 1, **characterized in that** a longitudinal beam (5) has two bearing bars (6) fastened to the outer panel (2), these bearing bars (6) extending over the whole length of the longitudinal beam (5), on either side of said opening (18).

3. The door as claimed in claim 2, **characterized in that** the longitudinal beam (5) comprises two lateral walls (12) extending obliquely toward one another from the two bearing bars (6).

4. The door as claimed in claim 3, **characterized in that** each bearing bar (6) is formed by a fold of one of the lateral walls (12).

5. The door as claimed in one of claims 2 to 4, **characterized in that** the longitudinal beam (5) comprises a top wall (7), opposed to the bearing bars (6), of which the width, measured in a plane perpendicular to the longitudinal axis of the longitudinal beam (5), is less than or equal to the distance separating the two bearing bars (6).

6. The door as claimed in any one of the preceding claims, **characterized in that** a longitudinal beam (5) comprises a load redundancy rib (11) extending longitudinally inside the longitudinal beam (5) over the whole length of the longitudinal beam (5).

7. The door as claimed in claim 6, **characterized in that** the load redundancy rib (11) is formed by a planar redundancy wall (13).

8. The door as claimed in claim 7, **characterized in that** the load redundancy rib (11) comprises fastening legs (14) for fastening the planar redundancy wall (13) to the longitudinal beam (5).

9. The door as claimed in claim 6, **characterized in that** the load redundancy rib (11) is formed by a tube (15).

10. The door as claimed in one of claims 2 to 7, **characterized in that** the longitudinal beam is formed by three separate parts forming a load redundancy wall.

11. The door as claimed in any one of the preceding claims, **characterized in that** the door structure (3) comprises a frame formed by the circumferential beams (4) and by two longitudinal beams (5) situated at the ends of the circumferential beams (4).

12. The door as claimed in any one of the preceding claims, **characterized in that** the longitudinal beams (5) are fastened, by each of their ends, to the circumferential beams (4).

13. The door as claimed in any one of the preceding claims, **characterized in that** the circumferential beams (4) comprise a web (8) formed by a single wall.

14. The door as claimed in claim 13, **characterized in that** a circumferential beam (4) comprises a fastening flange (9) fastened to the outer panel (2) and formed by a fold of the web (8) of the circumferential beam (4).

15. The door as claimed in any one of the preceding claims, **characterized in that** the circumferential beams (4) comprise reinforcing flanges (10) opposed to the outer panel (2).

16. The door as claimed in claim 15, **characterized in that** the reinforcing flanges (10) are fastened to the longitudinal beams (5).

17. The door as claimed in either of claims 15 and 16, **characterized in that** the reinforcing flange (10) of a circumferential beam (4) is formed by a fold of the web (8) of this circumferential beam (4).

18. The door as claimed in any one of the preceding claims, comprising at least one circumferential support extending between two longitudinal beams (5).

19. The door as claimed in any one of the preceding claims, comprising at least one porthole between two longitudinal beams (5).
